(19) Europäisches Patentamt
European Patent Office
Office européen des brevets

(11) EP 1 543 723 A1

(12) EUROPEAN PATENT APPLICATION

(43) Date of publication:
**22.06.2005 Bulletin 2005/25**

(51) Int Cl.[7]: **A01N 43/54**
// (A01N43/54, 43:16)

(21) Application number: **03356207.5**

(22) Date of filing: **19.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Bayer CropScience S.A.**
**69009 Lyon (FR)**

(72) Inventors:
- **Carbonne, Stéphane**
**69004 Lyon (FR)**
- **Jomain, Valérie**
**38540 Heyrieux (FR)**

(54) **Fungicide composition comprising at least one fungicidal iodochromone derivative and at least one fungicidal pyrimidine derivative**

(57) The present invention relates to a fungicide composition comprising at least one iodochromone fungicide derivative and at least one pyrimidine fungicide derivative of formula (I):

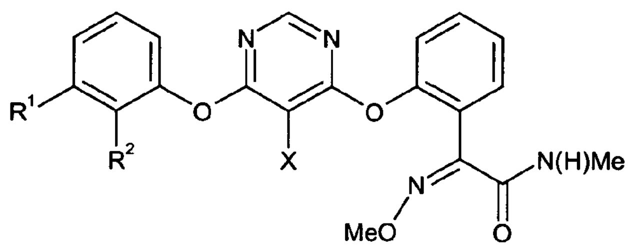

(I)

in which

- X represents halogen;
- $R^1$ and $R^2$ independently from each other represent hydrogen, halogen, $C_1$-$C_6$-alkyl; $C_1$-$C_6$-alkoxy or cyano.



Printed by Jouve, 75001 PARIS (FR)

## Description

The present invention relates to combinations of fungicide compounds intended in particular for protecting crops against fungal diseases, and the corresponding methods of protection by application of the said combinations.

More precisely, the subject of the present invention is a fungicide composition based on at least one iodochromone fungicide derivative and at least one fungicide pyrimidine derivative.

As regards fungicide activity, in particular for the protection of crops, one of the problems at the heart of the research studies carried out in this technical field is the improvement of performances, in particular in terms of fungicide activity and in particular in terms of maintaining this fungicide activity over time.

Naturally, the fungicide compounds useful for the protection of plants against fungi must be endowed with an ecotoxicity which is reduced to the minimum. As far as possible, they should not be dangerous or toxic to the operator during use.

Furthermore, it is advantageous for fungicide compounds to have a broad activity spectrum.

The economic factor should of course not be overlooked in the search for novel fungicide compositions.

Without being limiting, attention is paid more particularly in the context of the invention to protection against infestation, by fungi, of cereals, grapevine, vegetables, alfalfa, soyabean, market garden crops, turf, wood and horticultural plants, among others.

The compositions according to the invention include one or more of two types of fungicide derivatives as notably described in international patent applications published as WO-97/13762 and WO-98/21189 respectively. The iodochromone derivatives useful for the present invention may also be named as iodobenzopyranone derivatives. The pyrimidine derivatives of the present invention may also be named as methoxyimino-N-methylacetamide derivatives.

One of the essential purposes of the present invention is to provide fungicide products which can be used, in particular by the farmer, for controlling the fungi infesting crops and in particular for controlling diseases of cereal crops.

Another essential purpose of the invention is to provide a fungicide compound which is completely high-performing in particular as regards its efficacy against fungi and the perenniality of this efficacy so as to be able to reduce the doses of chemical products spread in the environment for combating fungal attacks of crops.

Another essential purpose of the invention is to provide a fungicide composition which is more active and active for longer, and which therefore has a lower dose, but which is also less toxic.

Another essential objective of the invention is to provide a broad-spectrum fungicide composition which is perennially effective and which offers the farmer a large number of products so that the latter finds among them the product best suited to his particular use.

Another essential objective of the invention is to provide a fungicide composition satisfying the specifications aimed at in the above objectives and which is also of a lower cost price, which is easy and which is not dangerous to handle.

Another essential objective of the invention is to provide a fungicide composition as defined in the above objectives and which is useful in the preventive and curative treatment of fungal diseases, for example, of cereals, Solanaceae, grapevine, vegetables, alfalfa, soybean, market garden crops, turf, wood or horticultural plants.

Another essential objective of the invention is to provide a fungicide composition exhibiting an improved efficacy against Basidiomycetes and Ascomycetes.

Another essential objective of the invention is to provide a preventive and/or curative treatment of plants and in particular of crops, using a fungicide composition or a fungicide combination combining the products of the composition as defined in the above objectives, it being necessary for such a treatment to have a high and perennial efficacy against a very wide variety of fungi, while minimising the doses, the toxicity or the cost.

Another essential objective of the present invention is to provide a kit for controlling, by way of curing and/or preventing and/or eradicating, the phytopathogenic fungi of plants and in particular of crops, which meets the specifications set out in the objectives above.

An additional objective of the present invention is to allow improvement in the yield of the crops which is significant from an agronomic point of view.

A further objective of the present invention is to provide a synergistic fungicide composition comprising at least both the two above-mentioned fungicide derivatives.

All these objectives, among others, were achieved by the inventors who have had the merit of finding a fungicide combination between at least one iodochromone derivative and at least one pyrimidine derivative; such a combination surprisingly and unexpectedly exhibiting a very high and perennial anti-fungal efficacy against a broad spectrum of fungi and in particular against those responsible for diseases of cereals such as Basidiomycetes or Ascomycetes.

The present invention, which completely or partially satisfies the above-mentioned objectives, relates firstly to a fungicide composition comprising:

A) at least one iodochromone fungicide derivative chosen in the list comprising

- 2-butoxy-6-iodo-3-propyl-benzopyran-4-one,
- 2-ethoxy-6-iodo-3-propyl-benzopyran-4-one,
- 6-iodo-2-propoxy-3-propyl-benzopyran-4-one,
- 2-but-2-ynyloxy-6-iodo-3-propyl-benzopyran-4-one,
- 6-iodo-2-(1 1-methyl-butoxy)-3-propyl-benzopyran-4-one,
- 2-but-3-enyloxy-6-iodo-3-propyl-benzopyran-4-one,
- 3-butyl-6-iodo-2-isopropoxy-benzopyran-4-one,
- 6-iodo-3-propyl-2-(tetrahydro-pyran-4-yloxy)-benzopyran-4-one,
- 6-iodo-3-propyl-2-(2,2,2-trifluro-ethoxy)-benzopyran-4-one; and

B) at least one pyrimidine fungicide derivative of formula (I):

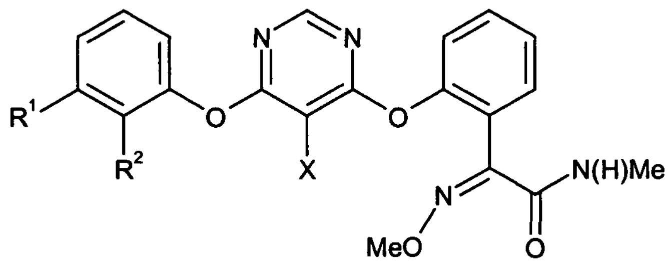

**(I)**

in which

- X represents halogen;
- $R^1$ and $R^2$ independently from each other represent hydrogen, halogen, $C_1$-$C_6$-alkyl, $C_1$-$C_6$-alkoxy or cyano.

The preferred compound A in the composition according to the invention is 2-butoxy-6-iodo-3-propyl-benzopyran-4-one.

In the composition according to the invention, compound B is preferably a compound of formula

(I) in which the following characteristics are present independently or in combination:

- X represents a chlorine or a fluorine atom;
- $R^1$ and $R^2$ independently from each other represent hydrogen, a fluorine, chlorine or bromine atom, methyl or ethyl, a methoxy or a cyano group.

In the composition according to the invention, compound B is more preferably of formula (I) in which

- X represents a fluorine atom; and
- $R^1$ and $R^2$ independently from each other represent hydrogen, a fluorine, chlorine or bromine atom, methyl or ethyl, a methoxy or a cyano group.

Even more preferably, compound B is of formula (I) in which:

- X represents a chlorine or a fluorine atom; and
- $R^1$ and $R^2$ independently from each other represent hydrogen, a fluorine or chlorine atom or methyl.

The most preferred compound B according to the invention is a compound of formula (I) in which X represents a fluorine atom, $R^1$ represents a chlorine atom and $R^2$ represents a methyl group, this compound is also known as 2-{2-[6-(3-Chloro-2-methylphenoxy)-5-fluoro-pyrimidin-4-yloxy]-phenyl}2-methoxyimino-N-methylacetamide.

The preferred composition according to the invention combines 2-butoxy-6-iodo-3-propyl-benzopyran-4-one and 2 -{2 -[6-(3-Chloro-2 -methylphenoxy )-S-fluoro-pyrim id in-4-yloxy]-phenyl}2-methoxyimino-N-methylacetamide.

With regard to the weight, the mass ratio A/B is defined as follows, A representing the iodochromone derivative and B the pyrimidine derivative in the fungicide composition according to the invention:

- $0.05 \leq A/B \leq 20$;
- preferably $0.1 \leq A/B \leq 10$;
- and still more preferably $0.2 \leq A/B \leq 1.5$.

The most preferred A/B ratios according to the present invention are equal to 0.25, 0.5 or 1.

The compound A/compound B ratio is defined as being the ratio by weight of these 2 compounds. The same applies to any ratio of 2 chemical compounds, which is subsequently measured in the present text unless a definition different from this ratio is not expressly given.

According to another aspect of the present invention, in the composition according to the present invention, the compound A/compound B ratio may be advantageously chosen so as to produce a synergistic effect. The term synergistic effect is understood to mean in particular that defined by Colby in an article entitled "Calculation of the synergistic and antagonistic responses of herbicide combinations" Weeds, (1967), 15, pages 20-22.

The latter article mentions the formula:

$$E = X + Y - (XY / 100)$$

in which

- E represents the expected percentage of inhibition of the disease for the combination of the two fungicides at defined doses (for example equal to x and y respectively);
- X is the percentage of inhibition observed for the disease by the compound A at a defined dose (equal to x);
- Y is the percentage of inhibition observed for the disease by the compound B at a defined dose (equal to y).

When the percentage of inhibition observed for the combination is greater than E, there is a synergistic effect.

The term "synergistic effect" may mean the effect defined by application of the Tammes method, "Isoboles, a graphic representation of synergism in pesticides", *Netherlands Journal of Plant Pathology,* 70(1964), pages 73-80.

The compound A/compound B ratio ranges indicated above do not in any way limit the scope of the invention, but are, rather, mentioned as a guide, a person skilled in the art being entirely capable of carrying out additional tests to find other values of the ratio of doses of these two compounds, for which a synergistic effect can be observed.

Usually, the compositions according to the invention comprise between 0.00001 and 100%, preferably between 0.001 and 80%, of active compounds, whether these compounds are combined, or whether they are in the form of two active ingredients used separately.

The fungicide composition according to the invention may also comprise one or more other active substances chosen from fungicide, herbicide, insecticide and/or plant or insect regulator active substances, according to the use for which they are intended.

Preferably, eventual additional active substances are fungicide compounds, in particular chosen in the list consisting of phenylmercuric acetate; *Ampelomyces quisqualis*; azaconazole; azoxystrobin; acibenzolar-S-methyl; *Bacillus subtilis*; benalaxyl; benomyl; biphenyl; bitertanol; blasticidin-s; Bordeaux mixture; borax; bromuconazole; bupirimate; calboxin; calcium polysulphide; captafol; captan; carbendazim; carboxin; carpropamid; chinomethionat; chlorothalonil; chlozolinate; fungicide compositions based on copper, copper itself or copper derivatives such as copper hydroxide; copper naphthenate; copper oxychloride; copper sulphate; copper oxide; cymoxanil; cyproconazole; cyprodinil; cyazofamid; dazomet; debacarb; dichlofluanid; dichlomezine; dichlorophen; diclocymet; dicloran; diethofencarb; difenoconazole; difenzoquat; difenzoquat metilsulphate; diflumetorim; dimethirimol; dimethomorph; dimoxystrobin; diniconazole; diniconazole-m; dinobuton; dinocap; diphenylamine; discostrobin; dithianon; dodemorph; dodemorph acetate; dodine; dodine free base; edifenphos; epoxiconazole; ethaboxam; ethasulfocarb; ethirimol; etridiazole; famoxadone; fenamidone; fenarimol; fenbuconazole; fentin acetate or hydroxide; fenfuram; fenhexamid; fenoxanil; fenpiclonil; fenpropidin; fenpropimorph; fentin acetate; fentin hydroxide; ferbam; ferimzone; fluazinam; fludioxonil; fluoroimide; fluoxastrobin; fluquinconazole; flusilazole; flusulfamide; flutolanil; flumetover; flutriafol; folpet; formaldehyde; fosetyl; fosetyl-aluminium; fuberidazole; furalaxyl; *Fusarium oxysporum*; furametpyr; 8-hydroxyquinoline sulphate; *Gliocladium virens*; guazatine; guazatine acetate; GY81; hexachlorobenzene; hexaconazole; hymexazol; potassium hydroxyquinoline sulphate; ICIA 0858; imazalil; imazalil sulphate; imibenconazole; iprobenphos; iminoctadine; iminoctadine triacetate; iminoctadine tris[albesilate]; ipconazole; iprobenfos; iprodione; iprovalicarb; isoprothiolane; kasugamycin; kasugamycin hydrochloride hydrate; kresoxim-methyl; mancopper; mancozeb; maneb; mefenoxame; mepanipyrim; mepronil; mercury(II) chloride; mercury(II) oxide; mercury(I) chloride; metalaxyl and enantiomers thereof, in

particular metalaxyl-M; metam; metam-sodium; metconazole; methasulfocarb; methyl isothiocyanate; metiram; metiram-zinc; metominostrobin; MON65500; myclotbutanil; nabam; naphthenic acid; zinc naphthenate; natamycin; nickel bis(dimethyldithiocarbamate); nitrothal-isopropyl; nuarimol; octhilinone; ofurace; oleic acid (fatty acids); oxadixyl; oxine-copper; oxycarboxin; penconazole; pencycuron; pentachlorophenol; pentachlorophenyl laurate; perfurazoate; 2-phenylphenol; *Phlebiopsis gigantea*; picobenzamid; phthalide; picoxystrobin; piperalin; polyoxine b; polyoxines; polyoxorim; probenazole; prochloraz; procymidone; propamocarb; propamocarb hydrochloride; propiconazole; propineb; prothioconazole; pyraclostrobin; pyrazophos; pyributicarb; pyrifenox; pyrimethanil; pyroquilon; quinoxyfen; quintozene; sec-butylamine; sodium 2-phenylphenoxide; sodium pentachlorophenoxide; silthiofam; simeconazole; spiroxamine; *Streptomyces griseoviridis*; sulphur; tar oils; tebuconazole; tecnazene; tetraconazole; thiabendazole; thifluzamide; thiophanate such as thiophanate-methyl; thiram; tolclofos-methyl; tolylfluanid; triadimefon; triadimenol; trifloxystrobin; triazolopyrimidines, in particular methyl cloransulam; flumetsulam; florasulam; metosulam; triazoxide; *Trichoderma harzianum*; tricyclazole; tridemorph; trifloxystrobin; triflumizole; triforine; triticonazole; validamycin; valinamide derivatives, in particular iprovalicarb and benthiavalicarb; vinclozolin; zineb; ziram; zenoxamide; zoxamide and mixtures thereof.

In addition to these additional active agents, the fungicide compositions according to the invention may also contain any other adjuvants and/or auxiliary agent useful in plant protection formulations such as, for example, an agriculturally suitable inert carrier and optionally an agriculturally suitable surfactant.

As regards the presentations of the composition according to the invention, it can be in the form of a large number of formulations. Thus, it is possible to use these compositions as aerosol dispenser; suspension of capsules; cold fogging concentrate; dustable powder; emulsifiable concentrate; aqueous/aqueous type emulsion; oil/inverse type emulsion; encapsulated granule; fine granule; suspension concentrate for seed treatment; compressed gas; gas generating product; granule; hot fogging concentrate; macrogranule; microgranule; oil-dispersible powder, oil miscible suspension concentrate; oil-miscible liquid; paste; plant rodlet; powder for dry seed treatment; seeds coated with a pesticide; smoke candle; smoke cartridge; smoke generator; smoke pellet; smoke rodlet; smoke tablet; smoke tin; soluble concentrate; soluble powder; solution for seed treatment; suspension concentrate (= flowable concentrate); ultra low volume liquid; ultra low volume suspension; vapour releasing product; water-dispersible granules or tablets; water dispersible powder for slurry treatment; water-soluble granules or tablets; water-soluble powder for seed treatment; wettable powder.

These compositions cover not only the compositions which are ready to be applied to the crop by means of a suitable device, such as a spraying device, but also the commercial concentrated compositions which have to be diluted before application to the crop.

The compositions described below are used in general for application to growing plants, or to sites where crops are grown or intended to grow, or for the coating or film-coating of seeds.

The compositions according to the invention are, appropriately, applied to the vegetation and in particular to the leaves infested or capable of being infested by the phytopathogenic fungi. Another method of applying the compounds or compositions according to the invention is to add a formulation containing the active ingredients to the irrigation water.

For their use in practice, the compositions according to the invention can be used alone and can also advantageously be used in formulations containing one or the other of the active ingredients or alternatively both of them together, in combination or association with one or more other compatible components which are, for example, solid or liquid fillers or diluents, adjuvants, surfactants or equivalents, which are suitable for the desired use and which are acceptable for uses in agriculture. The formulations can be of any type known in the sector which are suitable for application onto all types of cultures or crops. These formulations, which can be prepared in any manner known by the skilled person, also form part of the invention.

The formulations can also contain ingredients of other types, such as protective colloids, adhesives, thickeners, thixotropic agents, penetrating agents, oils for spraying, stabilizers, preserving agents (in particular mouldproofing or biocide agents), sequestering or chelating agents or the like, as well as other known active ingredients which have pesticide properties (in particular fungicide, insecticide, acaricide or nematocide properties) or which have properties of regulating plant growth. More generally, the compounds used in the invention can be combined with any solid or liquid additives corresponding to the usual formulation techniques.

In the present account, the term "filler" means an organic or inorganic, natural or synthetic component with which the active components are combined to facilitate its application, for example, onto the plants, the seeds or the soil. This filler is consequently generally inert and it must be acceptable (for example acceptable for agronomic uses, in particular for treating plants).

The filler can be solid, for example clays, natural or synthetic silicates, silica, resins, waxes, solid fertilizers (for example ammonium salts), natural soil minerals, such as kaolins, clays, talc, lime, quartz, attapulgite, montmorillonite, bentonite or diatomaceous earths, or synthetic minerals, such as silica, alumina or silicates, in particular aluminium or magnesium silicates. The solid fillers which are suitable for granules are as follows: natural, crushed or broken rocks, such as calcite, marble, pumice, sepiolite and dolomite; synthetic granules of inorganic or organic flours;

granules of organic material such as sawdust, coconut shell, corn ear or envelope, or tobacco stem; kieselguhr, tricalcium phosphate, powdered cork or adsorbent carbon black; water-soluble polymers, resins, waxes; or solid fertilizers. Such compositions can, if so desired, contain one or more compatible agents such as wetting agents, dispersing agents, emulsifiers or colourings which, when they are solid, can also act as diluents.

The fillers can also be liquid, for example: water, alcohols, in particular butanol or glycol, as well as ethers or esters thereof, in particular methyl glycol acetate; ketones, in particular acetone, cyclohexanone, methyl ethyl ketone, methyl isobutyl ketone or isophorone; petroleum fractions such as paraffinic or aromatic hydrocarbons, in particular xylenes or alkylnaphthalenes; mineral or plant oils; aliphatic chlorohydrocarbons, in particular trichloroethane or methylene chloride; aromatic chlorohydrocarbons, in particular chlorobenzenes; water-soluble or highly polar solvents such as dimethylformamide, dimethyl sulphoxide, N,N-dimethyl-acetamide or N-methylpyrrolidone; N-octylpyrrolidone, liquefied gases; or the like, whether they are taken separately or as a mixture.

The surfactant can be an emulsifier, a dispersing agent or a wetting agent, of ionic or nonionic type or a mixture of these surfactants. Among those surfactants there are used, for example, polyacrylic acid salts, lignosulphonic acid salts, phenolsulphonic or naphthalenesulphonic acid salts, polycondensates of ethylene oxide with fatty alcohols or fatty acids or fatty esters or fatty amines, substituted phenols (in particular alkylphenols or arylphenols), ester-salts of sulphosuccinic acid, taurine derivatives (in particular alkyl taurates), phosphoric esters of alcohols or of polycondensates of ethylene oxide with phenols, fatty acid esters with polyols, or sulphate, sulphonate or phosphate functional derivatives of the compounds described above. The presence of at least one surfactant is generally essential when the active ingredients and/or the inert filler are insoluble or only sparingly soluble in water and when the filler for the said composition to be applied is water.

The formulations according to the invention can also contain other additives such as adhesives or dyes. Adhesives such as carboxymethylcellulose, or natural or synthetic polymers in the form of powders, granules or matrices, such as gum arabic, latex, polyvinylpyrrolidone, polyvinyl alcohol or polyvinyl acetate, natural phospholipids, such as cephalins or lecithins, or synthetic phospholipids can be used in the formulations. It is possible to use colourings such as inorganic pigments, such as, for example: iron oxides, titanium oxides, Prussian blue; organic colouringstuffs, such as those of the alizarin, azo or metal phthalocyanin type; or of trace elements such as iron, manganese, boron, copper, cobalt, molybdenum or zinc salts.

According to another object, the invention relates to a method for controlling, by way of curing, preventing or eradicating, the phytopathogenic fungi of crops, characterized in that an effective (agronomically effective) and non-phytotoxic quantity of a fungicide composition as defined above is applied to the soil where plants grow or are capable of growing, to the leaves and/or the fruit of plants or to the seeds of plants.

In this method, a composition is used which is prepared beforehand by mixing the 2 active compounds.

According to a variant of such a method for controlling, by way of curing, preventing or eradicating, the phytopathogenic fungi of crops:

- a composition or combination of at least one compound A and of at least one compound B as defined above is used;
- the compounds A and B are applied simultaneously, separately or sequentially to the soil where plants grow or are capable of growing, to the leaves and/or the fruit of plants or to the seeds of plants, an effective (agronomically effective) and non-phytotoxic quantity. This variant corresponds to a fresh preparation of the fungicide composition.

It is also possible to apply simultaneously, successively or separately so as to have the conjugated or synergistic A/B effect of a composition each containing one of the two active ingredients A or B.

Advantageously, the quantity of fungicide composition or combination corresponds to a combined dose of compound A and of compound B of between about 15g/ha and about 1,500g/ha, preferably between about 70g/ha and about 700g/ha.

Compound A is preferably applied in an amount of from 5 to 500g/ha, more preferably in an amount of from 20 to 200g/ha. A preferred dose rate of compound is 50g/ha. In such a case compound A is preferably 2-butoxy-6-iodo-3-propyl-benzopyran-4-one.

Compound B is preferably applied in an amount of from 10 to 1,000g/ha, more preferably in an amount of from 50 to 500g/ha. A preferred dose rate of compound is 100 or 150g/ha. In such a case compound B is preferably 2-{2-[6-(3-Chloro-2-methylphenoxy)-5-fluoro-pyrimidin-4-yloxy]-phenyl}2-methoxyimino-N-methylacetamide.

Under specific conditions, for example according to the nature of the phytopathogenic fungus to be treated, a lower dose may offer adequate protection. Conversely, certain climatic conditions, resistance or other factors may require higher doses of active ingredient.

The effective working doses of the combinations used in the invention can vary within wide proportions, in particular depending on the nature of the phytopathogenic fungi to be eliminated or the degree of infestation, for example, of the plants with these fungi.

The optimum dose usually depends on several factors, for example on the type of phytopathogenic fungus

to be treated, on the type or level of development of the infested plant, on the density of vegetation, or alternatively on the method of application.

Without it being limiting, the crop treated with the fungicide composition or combination according to the invention is, for example, a cereal, but this could be grapevine, vegetables, alfalfa, soybean, market garden crops, turf, wood or horticultural plants.

The phytopathogenic fungi of crops which may be controlled by this method are selected from the group comprising:

- the group of oomycetes:
  - of the genus *Phytophthora* such as *Phytophthora phaseoli*, *Phytophthora citrophthora, Phytophthora capsici, Phytophthora cactorum, Phytophthora palmivora, Phytophthora cinnamomi, Phytophthora megasperma, Phytophthora parasitica, Phytophthora fragariae, Phytophthora cryptogea, Phytophthora porri, Phytophthora nicotianae, Phytophthora infestans* (mildew of Solanaceae, in particular late blight of potato or tomato);
  - of the family of Peronosporaceae, in particular *Plasmopara viticola* (vine downy mildew), *Plasmopara halstedei* (sunflower mildew), *Pseudoperonospora sp* (in particular cucurbit mildew (*Pseudoperonospora cubensis*) and downy mildew of hops (*Pseudoperonospora humuli*)), *Bremia lactucae* (mildew of lettuce), *Peronospora tabacinae* (downy mildew of tobacco), *Peronospora destructor* (downy mildew of onion), *Peronospora parasitica* (downy mildew of cabbage), *Peronospora farinosa* (downy mildew of chicory and downy mildew of beetroot);
- the group of adelomycetes (ascomycetes):
  - of the genus *Alternaria*, for example *Alternaria solani* (early blight of Solanaceae and in particular of tomato and potato),
  - of the genus *Guignardia,* in particular *Guignardia bidwelli* (black rot of grapevine),
  - of the genus *Venturia,* for example *Venturia inaequalis, Venturia pirina* (apple or pear scabs),
  - of the genus *Oidium,* for example powdery mildew of grapevine (*Uncinula necator*); oidium of leguminous crops, for example *Erysiphe polygoni* (powdery mildew of Cruciferae); *Leveillula taurica, Erysiphe cichoracearum, Sphaerotheca fuligena* (powdery mildew of cucurbits, of composites and of tomato); *Erysiphe communis* (powdery mildew of beetroot and cabbage); *Erysiphe pisi* (powdery mildew of pea and alfalfa); *Erysiphe polyphaga* (powdery mildew of haricot bean and cucumber); *Erysiphe umbelliferarum* (powdery mildew of ombellifera, in particular of carrot); *Sphaerotheca humuli* (hop mildew); powdery mildew of wheat and barley (*Erysiphe graminis forma specie tritici* and *Erysiphe graminis forma specie hordei*),
  - of the genus *Taphrina,* for example *Taphrina deformans* (peach leaf curl),
  - of the genus *Septoria,* for example *Septoria nodorum or Septoria tritici* (Septoria disease of cereals),
  - of the genus *Sclerotinia,* for example *Sclerotinia sclerotinium,*
  - of the genus *Pseudocercosporella,* for example *P. herpotrichoides* (eyespot of cereals),
  - of the genus *Botrytis cinerea* (grapevine, vegetable and market garden crops, pea and the like),
  - of the genus *Phomopsis viticola* (excoriosis of grapevine),
  - of the genus *Pyrenospora,*
  - of the genus *Helminthosporium,* for example *Helminthosporium tritici repentis* (yellow leaf spot of wheat) or *Helminthosporium teres* (yellow leaf spot of barley),
  - of the genus *Drechslera* or *Pyrenophora,*
- of the group of basidiomycetes :
  - of the genus *Puccinia,* for example *Puccinia recondita* or *striiformis* (wheat rust), *Puccinia triticina, Puccinia hordei,*
  - of the family *Rhizoctonia* spp, for example *Rhizoctonia solani.*

The compositions or combinations defined above may also have a biocide action against bacteria and viruses, such as for example:

- fire blight, *Erwinia amylovora;*
- bacterial streak of stone fruit trees, *Xanthomonas campestris;*
- pear blossom blight, *Pseudomonas syringae;*
- bacteriosis of rice and cereals;
- the viruses present on rice, vegetable and cereal crops.

The crops considered in the context of the present invention are preferably cereal crops (wheat, barley, maize, rice) and vegetable crops (haricot bean, onion, cucurbitaceae, cabbage, potato, tomato, sweet pepper, cabbage, pea, lettuce, celery, chicory), fruit crops (strawberry plants, raspberry plants), tree crops (apple trees, pear trees, cherry trees, ginseng, lemon trees, coconut palms, pecan trees, cacao trees, walnut trees, rubber trees, olive trees, poplars, banana trees), grapevine, sunflower, beetroot, tobacco and ornamental crops.

A classification based on the target crops may be illustrated as below:

- grapevine: powdery mildew (*Uncinula necator*), downy mildew (*Plasmopara viticola*), grey mould (*Botrytis cinerea*), excoriosis (*Phomopsis viticola*) and black rot (*Guignardia bidwelli*),
- Solanaceae: blight (*Phytophthora infestans*), alternara disease (*Alternaria solani*) and grey mould (*Botrytis cinerea*),
- vegetable crops: downy mildew (*Peronospora* sp., *Bremia lactucae, Pseudoperonospora* sp), alternara (*Alternaria* sp.), sclerotinia disease (*Sclerotinia* sp.), grey mould (*Botrytis cinerea*), foot or root rot (*Rhizoctonia* spp.), powdery mildew (*Erysiphe* sp.; *Sphaerotheca fuliginea*),
- arboriculture: scab (*Venturia inaequalis, V. pirina*), bacterial diseases (*erwinia amylovora, xanthomonas campestris*, *pseudomonas syringae*), powdery mildew (*Podosphaera leucotricha*) and Monilia (*Monilia fructigena*),
- citrus: scab (*Elsinoe fawcetti*), melanose (*Phomopsis citri*) and *Phytophthora* sp. diseases,
- wheat, as regards controlling the following seed diseases: Fusarium diseases (*Microdochium nivale* and *Fusarium roseum*), smuts (*Tilletia caries, Tilletia controversa* or *Tilletia indica*), Septoria disease (*Septoria nodorum*),
- wheat, as regards controlling the following diseases of the aerial parts of the plant: eyespot (*Pseudocercosporella herpotrichoiales*), take-all (*Gaeumannomyces graminis*), Fusarium disease of the foot (*F. culmorum, F. graminearum*), Rhizoctonia disease (*Rhizoctonia cerealis*), powdery mildew (*Erysiphe graminis forma specie tritici*), rusts (*Puccinia striiformis* and *Puccinia recondita*), Septoria diseases (*Septoria tritici* and *Septoria nodorum*) and yellow leaf spot of wheat (*Helminthosporium tritici-vulgaris*),
- wheat and barley, as regards controlling bacterial and viral diseases, for example barley yellow mosaic,
- barley, as regards controlling the following seed diseases: yellow leaf spot (*Pyrenophora graminea, Bipolaris, Pyrenophora teres* and *Cochliobolus sativus*), loose smut (*Ustilago nuda*) and Fusarium diseases (*Microdochium nivale* and *Fusarium roseum*),
- barley, as regards controlling the following diseases of the aerial parts of the plant: eyespot (*Pseudocercosporella herpofrichoides*), yellow leaf spot (*Pyrenophora teres* and *Cochliobolus sativus*), powdery mildew (*Erysiphe graminis forma specie hordei*), dwarf leaf rust (*Puccinia hordei*) and leaf blotch (*Rhynchosporium secalis*);
- potato, as regards controlling tuber diseases (in particular *Helminthosporium solani, Phoma tuberosa, Rhizoctonia solani, Fusarium solani*) and certain virus diseases (virus Y);
- cotton, as regards controlling the following diseases of young plants obtained from seeds: damping-off diseases and collar rot (*Rhizoctonia solani*, *Fusarium oxysporum*), black root rot (*Thielaviopsis basicola*),
- pea, as regards controlling the following seed diseases: anthracnose (*Ascochyta pisi, Mycosphaerella pinodes*), Fusarium disease (*Fusarium oxysporum*), grey mould (*Botrytis cinerea*), rust (*Uromyces pisi*),
- rape plant, as regards controlling the following seed diseases: *Phoma lingam* and *Alfernaria brassicae,* grey mould (*Botrytis cinerea*), and sclérotinia disease (*Sclerotinia sclerotinium*),
- maize, as regards controlling seed diseases (*Rhizopus* sp., *Penicillium* sp., *Trichoderma* sp., *Aspergillus* sp. *and Gibberella fujikuroi*), yellow leaf spot (*Bipolaris*), Fusarium disease (*Fusarium oxysporum*),
- rice: foot and root rot (*Rhizoctonia* spp.),
- flax, as regards controlling seed disease (*Alternaria linicola*),
- banana: Cercospora disease (*Mycosphaerella figiensis*),
- turf: rust, powdery mildew, yellow leaf spot, terruric diseases (*Microdochium nivale, Pythium* sp., *Rhizoctonia* so/ any, *Sclerotinia homeocarpa*),
- forest trees, as regards controlling damping-off (*Fusarium oxysporum, Rhizoctonia* solani).

Very advantageously, the method for controlling plant diseases according to the invention has shown excellent results against cereal diseases such as *Puccinia recondita, Septoria tritici* and *Blumeria graminis f. sp. hordei.*

The expression "are applied to the plants to be treated" is understood to mean, for the purposes of the present text, that the fungicide compositions which are the subject of the invention may be applied by means of various methods of treatment such as:

- spraying onto the aerial parts of the said plants a liquid comprising one of the said compositions,
- dusting, the incorporation into the soil of granules or powders, spraying, around the said plants, and in the case of trees injection or daubing,
- coating or film-coating the seeds of the said plants with the aid of a plant-protection mixture comprising one of the

said compositions.

Spraying a liquid onto the aerial parts of the crops to be treated is the preferred method of treatment.

The subject of the present invention is also a product comprising a compound A and a compound B as a combined preparation for simultaneous, separate or sequential use in controlling the phytopathogenic fungi of crops at a site.

Another object of the invention which is linked to the mode of preparing the composition according to the invention immediately before use consists of a kit-of-parts for controlling, curatively or preventively, the phytopathogenic fungi of crops, characterized in that it comprises at least one compound A of formula (I) and at least one compound B as defined above, intended to be combined or used simultaneously, separately or sequentially in controlling the phytopathogenic fungi of crops at a site.

It is therefore a pack in which the user finds all the ingredients for preparing the fungicide formulation which they wish to apply to the crops. These ingredients, which comprise in particular the active agents A and B and which are packaged separately, are provided in the form of a powder or in the form of a liquid which is concentrated to a greater or lesser degree. The user simply has to mix in the prescribed doses and to add the quantities of liquid, for example of water, necessary to obtain a formulation which is ready to use and which can be applied to the crops.

The following examples are given purely by way of illustration of the invention and do not limit it in any manner.

Examples

They are intended to give an illustration of the efficacy of the compositions according to the invention on various cereal diseases.

Compound A is 2-butoxy-6-iodo-3-propyl-benzopyran-4-one and compound B is of formula (I) in which X represents a fluorine atom, $R^1$ represents a chlorine atom and $R^2$ represents a methyl group also named 2-{2-[6-(3-Chloro-2-methylphenoxy)-5-fluoro-pyrimidin-4-yloxy]-phenyl}2-methoxyimino-N-methylacetamide.

The compounds, according to the invention were tested in a greenhouse under preventive conditions. A synergistic effect was demonstrated on the principal diseases affecting cereals, in particular wheat brown rust (*Puccinia recondita*), wheat leaf spot (*Septoria tritici*) and barley powdery mildew (*Blumeria graminis f. sp. hordei*).

The combination of active ingredients in table 1 were evaluated :

Table 1

| Active ingredients (a.i.) | Ratio | Applied doses Applied doses (g/ha) |
|---|---|---|
| compound A<br>a.i. in water + acetone (50/50) | - | 8, 16, 31, 62, 125 |
| compound B<br>a.i. in water + acetone (50/50) | - | 16, 31, 62, 125, 250 |
| compound A<br>a.i. in water + acetone (50/50)<br>+<br>compound B<br>a.i. in water + acetone (50/50) | 1/1 | |
| | 1/2 | |
| | 1/4 | |

The mixture of epoxyconazole and kresoxim-methyl (SC 125 g/l + 125 g/l - Ogam@) was used as reference at the recommended doses for application of 62+62g/ha and 125+125g/ha.

The compounds and mixtures tested were sprayed on wheat and barley plants :

- two replications,
- volume for application equivalent to 250 l/ha.

On the day following the application, the wheat plants were inoculated with brown *rust* (*Puccinia recondita*), glume blotch (*Septoria tritici*) and the barley plants with powdery mildew (*Blumeria graminis f. sp. hordet*).

Once the diseases had developed, the evaluation was made by determining the extent of disease per pot.

The level of synergy was calculated using the Colby formula in order to calculate the theoretical efficacy and to compare it to the observed efficacy:

Theoretical efficacy of A+B = efficacy of A (%) + efficacy of B (%)

- [efficacy of A (%) x efficacy of B (%) / 100]

If the observed efficacy is higher than the theoretical efficacy, a synergistic effect is demonstrated ; if it is equal, an additive effect is demonstrated ; if it is lower, an antagonist effect is demonstrated.

The results obtained for a mixture of compound A and compound B for controlling wheat brown rust are assembled in table 2 :

Table 2

| Active ingredients (a.i.) | Dose for application (g/ha) | Ratio | Observed efficacy (%) | Theoretical efficacy (%) | Level of synergy |
|---|---|---|---|---|---|
| compound A a.i. in water + acetone (50/50) | 16 | | 0 | - | - |
| | 31 | | 0 | - | - |
| compound B a.i. in water + acetone (50/50) | 31 | | 60 | - | - |
| | 62 | | 75 | - | - |
| compound A a.i. in water + acetone (50/50) + compound B a.i. in water + acetone (50/50) | 31+31 | 1/1 | 75 | 60 | 15 |
| | 16+31 | 1/2 | 80 | 60 | 20 |
| | 16+62 | 1/4 | 90 | 75 | 15 |

The results obtained for a mixture of compound A and compound B for controlling wheat leaf spot are assembled in table 3 :

Table 3

| Active ingredients (a.i.) | Dose for application (g/ha) | Ratio | Observed efficacy (%) | Theoretical efficacy (%) | Level of synergy |
|---|---|---|---|---|---|
| compound A a.i. in water + acetone (50/50) | 31 | | 0 | - | - |
| | 62 | | 0 | - | - |
| | 125 | | 0 | - | - |
| compound B a.i. in water + acetone (50/50) | 31 | | 0 | - | - |
| | 62 | | 10 | - | - |
| | 125 | | 75 | - | - |
| compound A a.i. in water + acetone (50/50) + compound B a.i. in water + acetone (50/50) | 31+31 | | 75 | 0 | 75 |
| | 62+62 | 1/1 | 75 | 10 | 65 |
| | 125+125 | | 90 | 75 | 15 |
| | 31+62 | 1/2 | 75 | 10 | 65 |

The results obtained for a mixture of compound A and compound B for controlling barley powdery mildew are assembled in table 4 :

Table 4

| Active ingredients (a.i.) | Dose for application (g/ha) | Ratio | Observed efficacy (%) | Theoretical efficacy (%) | Level of synergy |
|---|---|---|---|---|---|
| compound A a.i. in water + acetone (50/50) | 8 | | 40 | - | - |
| compound B a.i. in water + acetone (50/50) | 16 | | 50 | - | - |
| | 31 | | 60 | - | - |
| compound A a.i. in water + acetone (50/50) + compound B a.i. in water + acetone (50/50) | 8+16 | 1/2 | 98 | 70 | 28 |
| | 8+31 | 1/4 | 95 | 76 | 19 |

These results demonstrate a high synergistic effect of the mixtures of compound A and compound B in ratios of 1/1, 1/2 or 1/4 against barley powdery mildew, wheat brown rust and wheat leaf spot. These mixtures make it possible to obtain excellent results of efficacy at agronomic doses for application.

## Claims

**1.** A fungicide composition comprising:

A) at least one iodochromone fungicide derivative chosen in the list comprising

- 2-butoxy-6-iodo-3-propyl-benzopyran-4-one,
- 2-ethoxy-6-iodo-3-propyl-benzopyran-4-one,
- 6-iodo-2-propoxy-3-propyl-benzopyran-4-one,
- 2-but-2-ynyloxy-6-iodo-3-propyl-benzopyran-4-one,
- 6-iodo-2-(1 -methy)-butoxy)-3-propy)-benzopyran-4-one,
- 2-but-3-enyloxy-6-iodo-3-propyl-benzopyran-4-one,
- 3-butyl-6-iodo-2-isopropoxy-benzopyran-4-one,
- 6-iodo-3-propyl-2-(tetrahydro-pyran-4-yloxy)-benzopyran-4-one,
- 6-iodo-3-propyl-2-(2,2,2-trifluro-ethoxy)-benzopyran-4-one; and

B) at least one pyrimidine fungicide derivative of formula (I):

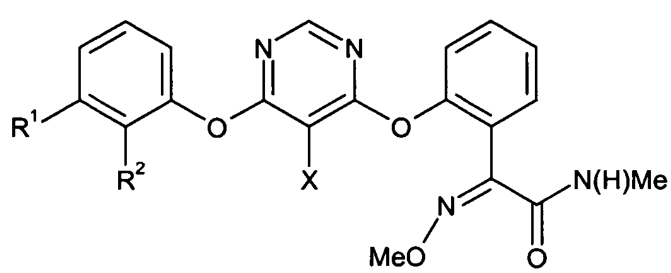

(I)

in which

- X represents halogen;
- $R^1$ and $R^2$ independently from each other represent hydrogen, halogen, $C_1$-$C_6$-alkyl, $C_1$-$C_6$-alkoxy or cyano.

**2.** A composition according to claim 1 in which compound A is 2-butoxy-6-iodo-3-propyl-benzopyran-4-one.

**3.** A composition according to claim 1 or 2 in which the following characteristics are present independently or in combination:

- X represents a chlorine or a fluorine atom;
- $R^1$ and $R^2$ independently from each other represent hydrogen, a fluorine, chlorine or bromine atom, methyl or ethyl, a methoxy or a cyano group.

**4.** A composition according to claim 1 to 3 in which:

- X represents a fluorine atom; and
- $R^1$ and $R^2$ independently from each other represent hydrogen, a fluorine, chlorine or bromine atom, methyl or ethyl, a methoxy or a cyano group.

**5.** A composition according to claim 1 to 4 in which:

- X represents a chlorine or a fluorine atom; and
- $R^1$ and $R^2$ independently from each other represent hydrogen, a fluorine or chlorine atom or methyl.

**6.** A composition according to claim 1 to 5 in which compound B is 2-{2-[6-(3-Chloro-2-methylphenoxy)-5-fluoro-pyrimidin-4-yloxy]-phenyl)2-methoxyimino-N-methylacetamide.

**7.** A composition according to claim 1 to 6 in which the mass ratio A/B is from 0.05 to 20.

**8.** A composition according to claim 7 in which the mass ratio A/B is from 0.1 to 10.

**9.** A composition according to claim 8 in which the mass ratio A/B is from 0.2 to 1.5.

**10.** A composition according to claim 9 in which the mass ratio A/B is equal to 0.25, 0.5 or 1.

**11.** A composition according to claim 1 in which compound A is 2-butoxy-6-iodo-3-propyl-benzopyran-4-one, compound B is 2-{2-[6-(3-Chloro-2-methylphenoxy)-5-fluoro-pyrimidin-4-yloxy]-phenyl}2-methoxyimino-N-methylacetamide and the mass ratio A/B is equal to 0.25, 0.5 or 1.

**12.** A method for controlling, by way of curing, preventing or eradicating, phytopathogenic fungi of crops using a composition according to claims 1 to 11.

**13.** A method according to claim 12 in which the quantity of fungicide composition or combination corresponds to a combined dose of compound A and of compound B of between about 15g/ha and about 1,500g/ha, preferably between about 70g/ha and about 700g/ha.

**14.** A method according to claim 11 or 12 in which compound A is applied in an amount of from 5 to 500g/ha

**15.** A method according to claim 14 in which compound A is applied in an amount of from 20 to 200g/ha.

**16.** A method according to claim 11 or 15 in which compound B is applied in an amount of from 10 to 1,000g/ha,

**17.** A method according to claim 16 in which compound B is applied in an amount of from 50 to 500g/ha.

European Patent Office

# EUROPEAN SEARCH REPORT

Application Number
EP 03 35 6207

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01/84931 A (MAULER MACHNIK ASTRID ; GAYER HERBERT (DE); BAYER AG (DE); WACHENDORFF) 15 November 2001 (2001-11-15)<br>* page 1, line 20 - page 28, line 17 * | 1-17 | A01N43/54 |
| A | FR 2 828 196 A (AVENTIS CROPSCIENCE SA) 7 February 2003 (2003-02-07)<br>* page 1, line 10 - page 2, line 18 *<br>* page 5, line 5 - page 7, line 21 * | 1-17 | |
| D,A | WO 98/21189 A (KRUEGER BERND WIELAND ; GAYER HERBERT (DE); STENZEL KLAUS (DE); BAYER) 22 May 1998 (1998-05-22)<br>* page 1, line 8 - page 2, line 14 *<br>* page 3, line 18 - line 19 *<br>* page 14, line 13 - line 18 * | 1-17 | |
| A | DATABASE CHEMABS [Online]<br>CHEMICAL ABSTRACTS SERVICE, COLUMBUS, OHIO, US;<br>XP002286731<br>retrieved from STN-INTERNATIONAL<br>Database accession no. 134:1598 CA<br>* abstract *<br>& JP 2000 336009 A (NIPPON SODA) 5 December 2000 (2000-12-05) | 1-17 | TECHNICAL FIELDS SEARCHED (Int.Cl.7)<br>A01N |

The present search report has been drawn up for all claims

| Place of search | Date of completion of the search | Examiner |
|---|---|---|
| The Hague | 1 July 2004 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

## ANNEX TO THE EUROPEAN SEARCH REPORT ON EUROPEAN PATENT APPLICATION NO. EP 03 35 6207

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2004

| Patent document cited in search report | | Publication date | Patent family member(s) | | | Publication date |
|---|---|---|---|---|---|---|
| WO 0184931 | A | 15-11-2001 | DE | 10103832 | A1 | 15-11-2001 |
| | | | AU | 7238301 | A | 20-11-2001 |
| | | | BR | 0110699 | A | 18-03-2003 |
| | | | CA | 2408221 | A1 | 15-11-2001 |
| | | | CN | 1429074 | T | 09-07-2003 |
| | | | CZ | 20023724 | A3 | 12-03-2003 |
| | | | WO | 0184931 | A1 | 15-11-2001 |
| | | | EP | 1289366 | A1 | 12-03-2003 |
| | | | HU | 0302025 | A2 | 29-09-2003 |
| | | | JP | 2003532654 | T | 05-11-2003 |
| | | | US | 2003229087 | A1 | 11-12-2003 |
| FR 2828196 | A | 07-02-2003 | FR | 2828196 | A1 | 07-02-2003 |
| | | | CA | 2451041 | A1 | 20-02-2003 |
| | | | WO | 03014103 | A1 | 20-02-2003 |
| | | | EP | 1412344 | A1 | 28-04-2004 |
| WO 9821189 | A | 22-05-1998 | DE | 19646407 | A1 | 14-05-1998 |
| | | | AU | 728544 | B2 | 11-01-2001 |
| | | | AU | 5052098 | A | 03-06-1998 |
| | | | BG | 103384 | A | 31-01-2000 |
| | | | BR | 9713499 | A | 29-02-2000 |
| | | | CN | 1242766 | A ,B | 26-01-2000 |
| | | | CZ | 9901681 | A3 | 11-08-1999 |
| | | | EA | 2471 | B1 | 27-06-2002 |
| | | | WO | 9821189 | A1 | 22-05-1998 |
| | | | EP | 0937050 | A1 | 25-08-1999 |
| | | | HU | 9904257 | A2 | 28-04-2000 |
| | | | ID | 23374 | A | 20-04-2000 |
| | | | IL | 129713 | A | 31-07-2003 |
| | | | JP | 2001504107 | T | 27-03-2001 |
| | | | KR | 2000053069 | A | 25-08-2000 |
| | | | PL | 333301 | A1 | 22-11-1999 |
| | | | US | 6235743 | B1 | 22-05-2001 |
| | | | US | 2001018442 | A1 | 30-08-2001 |
| | | | ZA | 9710098 | A | 25-05-1998 |
| JP 2000336009 | A | 05-12-2000 | NONE | | | |

EPO FORM P0459

For more details about this annex : see Official Journal of the European Patent Office, No. 12/82